# EUROPEAN PATENT SPECIFICATION

(11) **EP 3 845 351 B1**
(45) Date of publication and mention of the grant of the patent: **28.09.2022**
(21) Application number: 20000312.7
(22) Date of filing: 27.08.2020
(51) Int. Cl.: B27N 3/02, B27N 3/04, B27N 1/00, B27N 3/18, B27N 7/00

(54) **SORTED COMMUNAL WASTE PROCESSING METHOD**
VERARBEITUNGSVERFAHREN FÜR GETRENNTEN SIEDLUNGSABFALL
PROCÉDÉ DE TRAITEMENT DE DÉCHETS COMMUNAUX TRIÉS

(30) Priority: 03.01.2020 CZ 20200003
(43) Date of publication of application: 07.07.2021
(73) Proprietor: SMART TECHNIK a.s., 66452 Újezd u Brna (CZ)
(72) Inventor: Suchomel, Zdenek, 66453 Újezd u Brna (CZ); Horava, Frantisek, 602 00 Brno (CZ)
(74) Representative: Markes, Libor

(56) References cited:
- RU-C1- 2 103 165
- US-A- 5 435 954
- US-A1- 2019 360 204

## Description

The present invention concerns a method of processing sorted communal waste prevailingly containing paper and plastic for production of panels or boards for use mainly in the building industry.

EP 1323509 A1 and other patent documents reveal a known method of continual production of boards consisting of materials based on lignocelluloses, especially from wood chips and wood fibre. The method comprises drying of the crushed material, its levelling, together with a binder, along a continually running forming conveyor, wherein the thus formed continual mat passes through a continual belt press to be compacted and cured under pressure and heat effect. The material is cooled and cut to individual panels. The input raw material is wood waste originating in wood processing or furniture manufacturing plants, which however represent a relatively limited source of material for processing. The product is in addition enriched with an environmentally undesirable synthetic binder, e.g. phenol resin.

DE 1965673 A describes a device for manufacture of a polyurethane foam mat. A mixture of two components, mixing of which initiates an expansion process, is applied in a layer on a running base belt unwound from a coil. When the expansion process begins the layer enters a void under an also unwinding cover belt. The running composite belt is heated from underneath to accelerate solidification of the foam, and thickness of the sandwich is controlled from above by a row of crosswise positioned rollers.

US 2019/360204 provides a method of forming a core structure from a mixture of rice hulls and a polymeric binder, low density polyethylene among others. The composition is introduced into an extruder, pre-heated to a temperature in the range from 130 °C to 305 °C. In one embodiment the extrudate is spread over a first conveyor belt, while a second conveyor belt applies pressure within the range of from 1.38 MPa to 11.7 MPa to obtain the core of the desired thickness. The structure is eventually cooled.

Lignocelluloses, especially paper with plastics, form a considerable proportion of even unsorted waste. As for sorted waste taken directly from the communal sorting containers, both commodities are available directly as they have already been sorted out.

The present invention aims at proposing an environment-friendly method of production of panels for the building industry from sorted communal waste without addition of any binder.

The above mentioned task is solved by the subject-matter of claim 1.

Preferred with regard to the pressing technology is reduction of thickness of the half-product formed by the levelled waste, placed between the base and the cover belts, by passing under an oblique surface or a roller, to 70 % of the original thickness. To provide for water vapour release from the pressed sandwich the pressure is preferably repeatedly short-term reduced in the course of the hot pressing process.

The above described technology was developed for environment-friendly processing of specific waste by recycling for building material using physical and chemical properties of the two main components of the input material in mutual combination, in particular the ability of LDPE to form a reliable binder of dispersed lignocelluloses under certain temperature and pressure conditions.

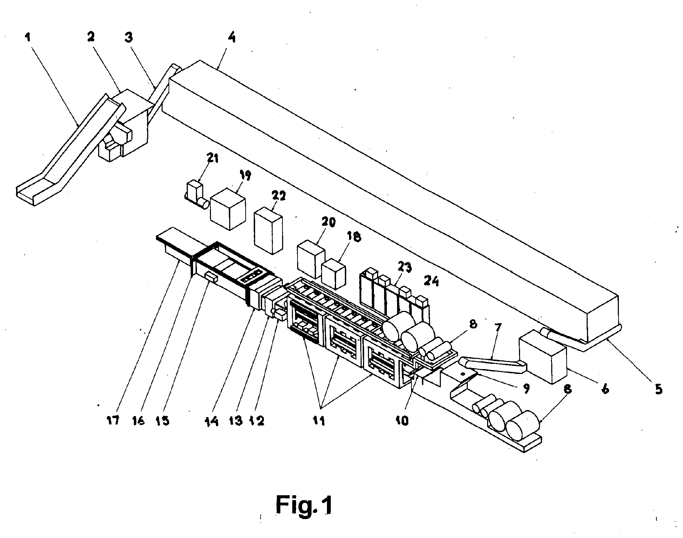

Fig. 1 shows a schematic isometric projection of a line for sorted waste processing according to the present invention as defined in claim 1.

To apply the waste processing method a set of specific machinery was composed to form a line working in a fully automatic or semi-automatic operation mode. The individual parts of the line display optimised mechanical and physical features for the given waste type processing. The principles of functions of the individual devices are known to a person skilled in the art, however, the line as a whole represents an original technology for the given purpose. The technology can be classified as waste-less, as all scrap, trimmings and fragments can be returned to the manufacturing process. Also used and no longer needed products can be recycled.

In the course of trial semi-operation separated waste was processed, containing 30 wt% of water and dry matter including 65 wt% of paper, 30 wt% of LDPE and 5 wt% of other admixtures, especially plastic with properties not meeting the requirements of the technology.

The waste is transported by a first conveyor **1** to a shredder **2** for crushing to flake-like particles able to pass though 30mm sieve holes. A magnetic metal separator is installed at the exit from the shredder **2.** The crushed waste, carried by a second conveyor **3,** enters a waste dryer **4,** where the said waste is dried to the eventual 5wt% humidity. The waste may also be processed without the drying step with humidity of up to 60 %, however at the expense of productivity and product quality.

The waste exiting the dryer is carried by a third conveyor **5** to enter a waste container **6** of an adequate capacity for feeding the pressing line. A fourth conveyor then transports the waste from the container **6** to a leveller/spreader **9.** The leveller **9** spreads the waste evenly, with the required layer thickness, across the base belt unwound from a coil **8.** The layer is subsequently covered with a cover belt unwound from another coil **8.** The material of the base and the cover belts is paper, but alternatively, not in line with the present invention, fibreglass or LDPE film may be used. The base and the cover material becomes an integral part of the product, forming its two-side face.

Before entering the pressing line the strip of the thus formed half-product is subject to pre-pressing **10,** i.e. a pass under an oblique surface, reducing the layer thickness to 70 %. The oblique surface may be replaced with a large-diameter cylinder, and/or with a set of small-diameter cylinders arranged in an oblique plane. Then the levelled/spread waste, together with the cover material, enters a step press line **11** where it is moved by jog rollers **12.** In the described example of a preferred embodiment the press line **11** comprises three presses, the first two - hot presses heating the half-product to 190 °C and the third - cold press cooling the half-product to 40 °C by a coolant with the temperature of 10 °C. The working pressure is 0.8 MPa, identical in all three presses. Hot pressing is doubled for this technological step to be time synchronised with the rest of the line.

In the case of continual pressing the levelled/spread waste enters pre-pressing, together with the cover material, in the press line **11** by means of a bottom and a top sheet-metal carrier conveyors moving the processed material continually through the press line **11.** While in the case of step pressing the product is pressed in several steps, i.e. in several pressing units, in the case of continual pressing the product is pressed in several stages, i.e. sections of a single press line, under similar prescribed physical conditions.

Depending on the required productivity, spatial conditions, or for other reasons, the selected press arrangement in the above described step press line may vary, e.g. 1 hot and 1 cold press, 2 hot presses and 1 cold press (see the above described referred embodiment), 4 hot presses and 2 cold presses etc.

The pressing time depends on the waste composition, humidity, thickness of the pressed board, temperature of the press plates, the press compression and ambient temperature. Generally: T = 0.6 P + 20.4 L, where T is the pressing time, P is wt% of paper in the dry matter, and L is wt% of LDPE in the dry matter. In the described example of a preferred embodiment for production of 12mm thick boards of the material with the above described composition the summary pressing time in both hot press units amounted to about 11 minutes. The hot press units, or sections, must be able to release the formed vapours developing in the course of the pressing process as a result of evaporation of residual humidity from the pressed waste. That is why the pressure of the hot pressing process is repeatedly short-term leap reduced. When the pressing process ends the press line **11** releases a mother board, which then enters the finishing part of the technological line, performing the following procedures: control measurement **13** of the board thickness, formatting the mother board by a formatting saw **14** to the final product, shredding **15** of the side trimmings and pallet stacking by a packaging portal **16** on a packaging table **17.**

The technology further includes a hydraulic aggregate **18,** a cooler **19** of the cold press, a cooler **20** of the hydraulic aggregate, a compressed air preparation compressor **21,** a sawdust exhaust unit **22,** a main switchboard **23** and a control panel **24.**

The size of a standard product for European markets: width 1,250 mm, length 2,500 mm. The product length may be any, usually up to 3,000 mm, but the nature of the technology in principle permits production of boards of any length without limitation. The key properties of the product include high compactness, elasticity and mechanical resilience, high density, water resistance, harmlessness to health and recyclability. The main product application areas in the building industry include: flat and inclined roofs, house walls, house interiors and acoustic and thermal insulations.

The technology according to the present disclosure processes waste hard to recycle to a final building material, or product, without use of added adhesives and/or other binders. The technology is waste-less, all scrap, trimmings and sawdust may be returned to the manufacturing process, as well as used and no longer needed boards which may be reprocessed into new products.

## Claims

1. A method of processing of sorted communal waste to panels usable in the building industry, comprising sorting, crushing, drying, levelling/ spreading and pressing of the waste and formatting of the panel, the sorted waste is shredded to pass through sieve hole sizes 20 to 40 mm and dried to a water content of 5 to 10 wt%, the solid component of the sorted waste comprises 60 to 80 wt% of lignocelluloses in form of paper, 20 to 40 wt% of low-density polyethylene (LDPE) and maximum 8 wt% of admixtures in form of wood, fabrics, other plastics or metals, the method comprising:
- levelling the sorted waste on a running base paper belt unwound from a coil (8) without addition of any adhesive,
- covering the waste with a cover paper belt unwound from another coil (8),
- pressing the waste between the base belt and the cover belt under pressure within the range from 0.4 MPa to 1 MPa and at a temperature within the range from 180 °C to 210 °C,
- cooling the sandwich formed in this way from the waste material, cover paper belt and base paper belt, again under the pressure ranging from 0.4 to 1 MPa, to a formatting temperature.

2. The method according to claim 1, **characterised in that** thickness of the half-product formed by the levelled waste between the base and the cover belts, is reduced before pressing by a pass under an oblique surface or roller to 70 % of its original thickness.

3. The method according to claims 1 or 2, **characterised in that** the pressure is repeatedly short-term reduced in the course of the hot pressing.

## Patentansprüche

1. Verfahren zur Verarbeitung von sortiertem kommunalem Abfall zu im Bauwesen benutzbaren Platten, welches Sortieren, Zerkleinerung, Trocknen, Schichtspaltung und Pressen des Abfalls und Formatierung der Platte umfasst, wobei der sortierte Abfall zwecks Durchgang durch ein Sieb mit Maschen von 20 bis 40 mm zerkleinert und zu Wasserinhalt von 5 bis 10 Gew.-% getrocknet wird, wobei die feste Komponente des Abfalls durch 60 bis 80 Gew.-% von Lignozellulose in Form von Papier, 20 bis 40 Gew.-% von Polyethylen niedriger Dichte (LDPE) und maximal 8 Gew.-% von Beimischungen in Form von Holz, Stoff, anderen Plastikmaterialien oder Metallen gebildet ist,
wobei das Verfahren einschießt:
- Schichtspaltung von sortiertem Abfall auf ein sich von einer Spule (8) abwickelndes Papiergrundband ohne Dosierung von Adhäsivum,
- Verdecken des Abfalls mit einem sich von einer anderen Spule (8) abwickelnden Deckpapierband,
- Pressen des Abfalls zwischen dem Grund- und dem Deckband unter einem Druck im Bereich von 0,4 MPa bis 1 MPa und bei einer Temperatur im Bereich von 180 °C bis 210 °C,
- Abkühlung des auf diese Weise aus Abfallmaterial, Deckpapierband und Grundpapierband gebildeten Sandwichs auf die Formatierungstemperatur, wieder unter einem Druck im Bereich von 0,4 MPa bis 1 MPa.

2. Das Verfahren nach Anspruch 1, **dadurch gekennzeichnet, dass** die Dicke des durch den geschichteten Abfall zwischen dem Grund- und dem Deckband gebildeten Halbfabrikats mittels eines Durchgangs unter einer schrägen Fläche oder einer Gegenwalze bis zu 70 % reduziert wird.

3. Das Verfahren nach Anspruch 1 oder 2, **dadurch gekennzeichnet, dass** der Druck während des Pressens wiederholt kurzfristig reduziert wird.

## Revendications

1. Procédé de traitement des déchets communaux triés en panneaux utilisables dans l'industrie de la construction, qui comprend le tri, le concassage, le séchage, la stratification et le pressage des déchets et le formatage du panneau, par laquelle les déchets triés sont broyés pour passer à travers l'œil d'un tamis mesurant 20 à 40 mm et séchés à une teneur en eau de 5 à 10 % en poids, où le composant solide des déchets triés est de 60 à 80 % en poids de lignocellulose sous forme de papier, 20 à 40 % en poids de polyéthylène basse densité (PEBD) et un maximum de 8 % en poids des ingrédient, sous forme de bois, de tissus, d'autres matières plastiques ou métaux,
où la méthode consiste dans :
- la stratification des déchets triés sur une bande de papier de support dépliée de la bobine (8) sans ajouter d'adhésif,
- le recouvrement des déchets d'une bande de papier de couverture déroulée à partir d'une autre bobine (8),
- le pressage des déchets entre la bande de support et la bande de couverture à une pression comprise entre 0,4 MPa et 1 MPa et à une température dans la gamme entre 180 °C et 210 °C,
- le refroidissement du sandwich formé de déchets, de la bande de support et de la bande de couverture à une pression entre 0,4 et 1 MPa à la température de formatage.

2. Procédé selon la revendication 1 **caractérisé en ce que** l'épaisseur du produit intermédiaire constitué par les déchets entre la bande de support et de la bande de couverture est réduite à 70 % de l'épaisseur d'origine avant le pressage en passant sous une surface inclinée ou un cylindre.

3. Procédé selon l'une quelconque des revendications 1 à 2 **caractérisé en ce qu'au** cours du pressage à chaud, la pression diminue à plusieurs reprises pour une courte période.
